# EUROPEAN PATENT APPLICATION

(11) **EP 0 881 643 A1**
(43) Date of publication of application: **02.12.1998**
(21) Application number: 97201594.5
(22) Date of filing: 26.05.1997
(51) Int. Cl.: G11B 33/04

(54) **Device for storage of disc-shaped articles**

(71) Applicant: TOMBO TRADING INTERNATIONAL B.V., 1132 XM Volendam (NL)
(72) Inventor: Bokstijn, Tom, 1132 XM Volendam (NL)
(74) Representative: de Bruijn, Leendert C.

(57) **Abstract**

Box-shaped device for storage of disc-shaped articles. A rectangular magazine is provided comprising adjacent storage cavities for the discs. This magazine is surrounded on all sides by a wall. At least the wall portion at the front side of the magazine is provided with an opening and is displaceable to position the opening in front of the related storage cavity. The opening is provided with sealing means whilst injector means are provided to remove the related disc.

## Description

The invention relates to the preamble of claim 1. Such a device is known from US-A-4753343. In this patent specification an audio disc storage container is shown having a moveable flexible transparent wall. This wall is provided with an aperture being sized to provide sufficient room to insert or remove a disc. More particular the width of aperture is sized so that it wide enough for the fingers of a human hand to be inserted therein to grasp a disc when removing the disc from a storage container or to insert a disc therein.

Storage containers are used for accommodating articles such as audio and video discs without their original package. This means that separate measures have to be taken to prevent dust entering the related storage container or cavity. Because in the device known from US-A-4753343 the opening is relatively wide to allow ingress of the fingers of the user at removal of the discs ingress of dust and other foreign matter is not effectively prevented.

US-A-5445449 (applicant) shows a storage device having a stationary circular magazine. The rotatable front plate has an opening which can be positioned by rotating in front of the related magazine. To prevent the ingress of dust this opening is provided with bristles. Removal of the discs from the magazine is by an ejector mechanism which is arranged in the centre of rotation of the magazine and through its operation the ejecting means proper can be brought against the related discs to be removed.

Although this device functions satisfactory it has the drawback that it is not possible to stack a number of such storage devices on each other.

The inventions aims to provide a device for storage of disc-shaped articles which can be combined with other similar devices either by stacking or placing adjacent to eachother in which discs can be stored and which is substantially dust-tight.

This aim is realized with the characterizing features of claim 1. Through the use of discharge means it is possible to seal the opening because it is no longer necessary to allow entrance of fingers at removal of the discs. Furthermore because the disc is not longer firmly engaged by the finger tips of the circumferential the presence of finger prints on the discs is prevented. The discharge means are connected to the part of the circumferential wall which comprises the opening. I.e. the discharge means move to-and-fro together with the front wall opening. To that end guide means are provided.

These guide means can comprise any prior art system but preferably comprise two spaced guide rails at cooperating slides. One of the guide rails/slide assemblies is arranged near the opening in the front wall whilst the other one is provided between the magazine and the rear wall of the device. These slides can be connected with eachother through a cross-bar. On the cross-bar a slidable actuating means is provided connected to pusher means. These actuating means together with pusher means can effect a movement substantially perpendicular to the movement of the opening and parallel in the direction of insertion of the related discs.

Although it is possible to have a moveable front wall only bounded by stationary side walls and a stationary rear wall, according to a preferred embodiment a single flexible cover functioning as wall is provided. This cover is engaged between grooves in the bottom plate and the top wall. This endless cover is provided with the opening mentioned above.

In order to prevent the pushing mean from engaging in the space between two discs, in a preferred embodiment of the invention indexing means, permitting operation of the pusher only in specific discrete positions are provided. For the facilitation of the accurate positioning of the opening and in order to be in a position to remove the correct object immediately, in a preferred embodiment indicator means are present for determining the position of the slidable wall relative to the remainder of the device.

The invention will be explained in greater detail below with reference to an example of a preferred embodiment of the invention shown in the drawing in which:
Fig. 1 shows a front perspective view of the device according to a preferred embodiment of the invention;
Fig. 2 shows a rear perspective view of the device according to fig. 1 partially broken away; and
Fig. 3 shows a plan view of the device according to figs. 1 and 2.

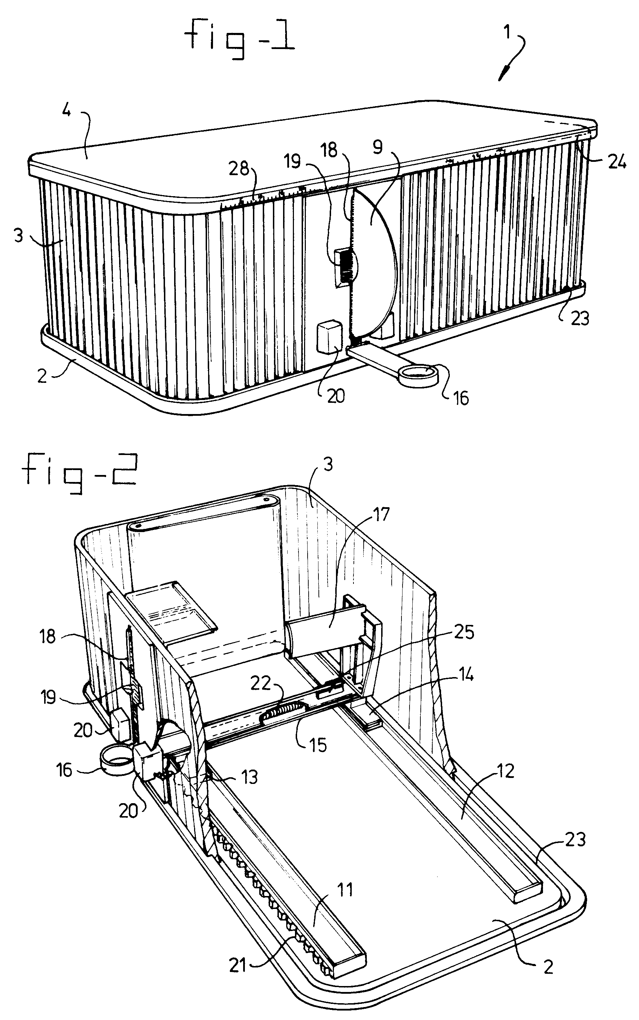

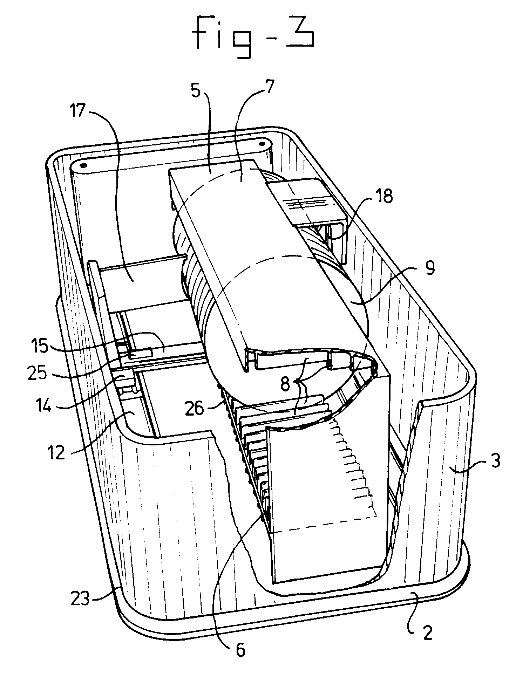

The storage device according to the invention is shown in fig. 1 and is indicated in its entirety by 1. It comprises a bottom plate 2 and a top wall 4 connected to a stationary magazine 5. Circumferential wall 3 is received in grooves 23, 24 in both bottom plate 2 and top wall 4 respectively. Circumferential wall 3 can be displaced in these grooves 23, 24. Circumferential wall 3 is provided with opening 18 which will move during displacement of the circumferential wall along the front side of the magazine to be placed in front of a disc 9 to be introduced or removed. Magazine 5 comprises two plates or strips 6, 7 provided with grooves 8. In each of the grooves 8 a disc-shaped article 9 can be received. At its front side the magazine is provided with a row 21 of teeth. These teeth can cooperate with indexing knobs 20. By actuating knobs 20 there is no engagement between the front side of the wall and the row 21 of teeth. If actuation is no longer continued the opening 18 will always be positioned in a discrete position exactly in front of a storage cavity for disc 9.

Centring cam 25 provides accurate positioning of cross member 15 with regard to teeth 26 of magazine 5 and so of pusher 17 relative to the related disc.

Opening 18 is provided with a sealing such as a bristle 19 cleaning the disc at introduction in magazine 5 and preventing ingress of dust.

Ejection of the discs is provided by a mechanism running on two guiding rails 11 and 12. Guiding rail 11 is near opening 18 whilst guiding rail 12 is between the rear wall of the device and the rear side of magazine 5. On each guiding rail a slide 13, 14 respectively is provided being connected to a cross member 15. This cross member is connected to the front wall somewhere near opening 18 and if the front wall is moved to-and-fro this cross member will move along. On the cross member an actuation rod 16 is arranged which can be moved inwardly and outwardly and this actuation rod is connected to a pusher 17. Spring 22 is provided to bias pusher 17 away from discs 9.

The storage device according to the invention is operated as follows. Initially the cross member together with the opening is moved by moving of the front wall towards the location of the object to be removed from the magazine. To facilitate exact location of the opening in front of the related magazine on the edge of either the bottom plate or top wall and the adjacent part of the circumferential wall cooperating indicating means 28 may be provided. For example, it is possible to provide a circumferential front edge of the bottom plate with a scale and to position a pointer near opening 18 on the slidable front wall.

Exact alignment is realized by interaction of indexing knob 20 and the row 21 of teeth. As alternative it might be Possible to operate the wall without actuating knobs 20. By means of a spring pressure biased ball or other means preferential location of opening 18 relative to the row 21 of teeth can be effected.

If the opening is placed in front of an empty cavity of magazine 5 a disc can he inserted through bristles 19. Actuating rod 16 is in this condition in its inward position.

For removal of a disc 9 opening 18 is positioned in front of the related disc and subsequently actuation rod 16 is acted upon. During its outward movement pusher 17 will push at the rear side of the disc against the effect of spring 22 to expose at least a part of the disc from opening 18. The user can now grasp the disc 18 without putting too much of his finger print on the surface of the disc.

As the magazine at its front side is permanently covered by means of the circumferential wall which consists of a flexible web as well as the bottom plate and top wall the objects within the magazine are always protected against dust, light etc..

It is to be understood that the invention is not limited to the illustrations described and shown herein which are deemed to be merely illustrative of the best mode of carrying out the invention and which are susceptible of modification of form, size, arrangement of parts and details of operation. It is possible to provide this device with actuating means which could be connected to a computer to automatically eject a desired cd after simply operating a keyboard or other means.

The invention is rather intended to encompass all such modifications which are within its spirit and scope as defined by the enclosed claims.

## Claims

1. Device (1) for storage of disc-shaped articles, comprising a substantially box-shaped magazine (5) having spaced storage cavities, said magazine being provided with at least a circumferential wall extending between the top wall (4) and bottom plate (2), said circumferential wall being at least adjacent to the introduction/removal side of the magazine linearly displaceable and provided with an opening (18) which can be placed in front of the related storage cavity, characterized in that said opening is provided with sealing means (19), discharge means (17) being provided at the side of the magazine opposite to the introduction/removal side, said discharge means being connected to the part of the circumferential wall including said opening, wherein said discharge means being linearly displaceable along guide means (11-14).

2. Device according to claim 1, wherein said guide means comprise two spaced guide rails and cooperating slides, one guide rail-slide assembly being arranged adjacent to the introduction/removal side and the other one being between said magazine and the rear circumferential wall of said device.

3. Device according to claim 2, wherein said slides are interconnected by a cross-member (15) having slidable actuating means (16) connected to pusher means (17).

4. Device according to one of the previous claims, wherein said circumferential wall comprises a single flexible covering being guided in the bottom plate and top wall.
